# EUROPÄISCHE PATENTANMELDUNG

(11) **EP 2 754 923 A1**
(43) Veröffentlichungstag der Anmeldung: **16.07.2014**
(21) Anmeldenummer: 13189913.0
(22) Anmeldetag: 23.10.2013
(51) Int. Cl.: F16H 61/00, F16H 63/30

(54) **Hydraulische Stellvorrichtung für ein automatisches Kraftfahrzeuggetriebe**

(71) Anmelder: Metalsa Automotive GmbH, 51702 Bergneustadt (DE)
(72) Erfinder: Bogner, Dirk, 58313 Herdecke (DE); Hoerenbaum, Burkhard, 59457 Werl (DE); Ueberacker, Heiner, 58640 Iserlohn (DE)
(74) Vertreter: Kalkoff & Partner

(57) **Zusammenfassung**

Die Erfindung betrifft eine hydraulische Stellvorrichtung für ein automatisches Kraftfahrzeuggetriebe, insbesondere Doppelkupplungsgetriebe, mit einer zur Verstellung des Getriebes längs verschiebbaren Schaltstange mit an ihren gegenüberliegenden Enden angeordneten Kolbenabschnitten sowie einer Zylindereinheit mit zwei zur Aufnahme der Kolbenabschnitte ausgebildeten Zylinderräumen. Um eine hydraulische Stellvorrichtung bereitzustellen, die eine prozesssichere Montage gewährleistet, ist vorgesehen, dass die Zylinderräume innerhalb zweier im Abstand voneinander angeordneter, über einen Grundkörper miteinander verbundener Zylinderkörper (8, 8a) angeordnet sind.

## Beschreibung

Die Erfindung betrifft eine hydraulische Stellvorrichtung für ein automatisches Kraftfahrzeuggetriebe, insbesondere Doppelkupplungsgetriebe, mit
- einer zur Verstellung des Getriebes längs verschiebbaren Schaltstange mit an ihren gegenüberliegenden Enden angeordneten Kolbenabschnitten sowie
- einer Zylindereinheit mit zwei zur Aufnahme der Kolbenabschnitte ausgebildeten Zylinderräumen.

In manuell schaltbaren, wie auch in automatisierten Schaltgetrieben dienen Schaltstangen zur getriebeinternen Durchführung der erforderlichen Schaltvorgänge, d. h. dem Ein- und Auslegen der einzelnen Gangstufen. Aus dem Stand der Technik sind hydraulische Stellvorrichtungen für Kraftfahrzeugschaltgetriebe der eingangs genannten Art bekannt, bei denen an einer Schaltstange ein in einem Zylindergehäuse geführter Stellzylinder angeordnet ist, wobei über eine Druckbeaufschlagung der Zylinderräume eine Verschiebung der Schaltstange erfolgen kann, so dass bspw. Schaltgabeln für einen Gangwechsel betätigt und positioniert werden können.

Durch eine Axialverschiebung der Schaltstange im Falle einer hydraulischen Beaufschlagung der Kolbenabschnitte kann bspw. durch eine zugeordnete Schaltgabel eine Schaltmuffe in Richtung eines auf einer Getriebewelle drehbar gelagerten Gangzahnrades verschoben werden, wodurch der betreffende Gang eingelegt und die zugeordnete Getriebeübersetzung wirksam wird. Einer einzigen Schaltstange sind dabei zumeist zwei Gänge zugeordnet, die wechselseitig ein- und auslegbar sind.

Insbesondere bei wechselseitig arbeitenden Schaltstangen besteht jedoch das Problem, dass es bei der Montage der hydraulischen Stellvorrichtung, in deren Rahmen die Schaltstange mit den Kolbenabschnitten innerhalb der Zylindereinheit platziert werden muss, zu Beschädigungen von an den Kolbenabschnitten angeordneten Dichtungselementen kommen kann. Insbesondere die zur Verbindung der Schaltstange mit dem Getriebe notwendige Öffnung in der Zylindereinheit kann regelmäßig einen Grat aufweisen, welcher zu einer nachhaltigen Beschädigung eventueller Dichtelemente an den Kolbenabschnitten führt.

Der Erfindung liegt die Aufgabe zugrunde, eine hydraulische Stellvorrichtung bereitzustellen, die eine prozesssichere Montage gewährleistet.

Die Erfindung löst die Aufgabe durch eine hydraulische Stellvorrichtung mit den Merkmalen des Anspruchs 1. Vorteilhafte Weiterbildungen der Erfindung sind in den abhängigen Ansprüchen angegeben.

Kennzeichnend für die erfindungsgemäße Stellvorrichtung ist, dass die Zylinderräume innerhalb zweier im Abstand von einander angeordneter Zylinderkörper angeordnet sind, die über einen Grundkörper miteinander verbunden sind. Erfindungsgemäß sind demnach die Zylinderräume in zwei separaten Zylinderkörpern ausgebildet, die relativ zueinander über den Grundkörper festgelegt werden. Die Schaltstange erstreckt sich somit entlang des gesamten Grundkörpers und ist mit den Kolbenabschnitten in den jeweils gegenüberliegend angeordneten Zylinderräumen angeordnet.

Die erfindungsgemäße Mehrteiligkeit der Zylindereinheit erlaubt es, eine prozesssichere Montage der Stellvorrichtung durchzuführen, bei der die Kolbenabschnitte mit gegebenenfalls vorgesehenen Dichtungselementen nicht mit dem Grundkörper in Kontakt gelangen, so dass Beschädigungen der Kolbenabschnitte durch Unregelmäßigkeiten an dem Grundkörper ausgeschlossen werden können. So kann bspw. eine Montage der Stellvorrichtung in der Weise erfolgen, dass die Schaltstange zunächst an dem Grundkörper angeordnet wird und anschließend die Kolbenabschnitte ggf. mit Dichtungselementen versehen und dann in den Zylinderkörpern platziert werden.

Darüber hinaus bietet die Verwendung eines separaten Grundkörpers die Möglichkeit, diesen aus einem von dem Werkstoff für die Zylinderkörper abweichenden Werkstoff zu fertigen, da dieser nicht die Anforderungen an die Druckbeständigkeit erfüllen muss, wie dies bei den Zylinderkörpern der Fall ist. Die erfindungsgemäße Stellvorrichtung lässt sich somit besonders prozesssicher sowie kostengünstig herstellen.

Die Ausgestaltung des Grundkörpers sowie die Verbindung des Grundkörpers mit den Zylinderkörpern ist grundsätzlich frei wählbar. Nach einer besonders vorteilhaften Ausgestaltung der Erfindung ist jedoch vorgesehen, dass der Grundkörper als Hohlzylinder mit endseitigen Aufnahmeabschnitten zur Anordnung der Zylinderkörper ausgebildet ist. Die Ausgestaltung des Grundkörpers als Hohlzylinder zeichnet sich dabei dadurch aus, dass dieser bauformbedingt eine hohe Festigkeit aufweist. Zudem lässt die Ausgestaltung eine besonders kompakte Ausgestaltung der Stellvorrichtung zu, wobei die endseitigen Aufnahmeabschnitte, welche bspw. durch Absätze an dem Grundkörper gebildet sein können, eine zuverlässige Anordnung der Zylinderkörper ermöglichen. Die Position der Zylinderkörper kann dabei zusätzlich durch ergänzende Befestigungsmittel, wie Klebemittel oder Sicherungsstifte gesichert werden.

Grundsätzlich kann bei der erfindungsgemäßen Ausgestaltung der Stellvorrichtung aufgrund der Führung der Kolbenabschnitte in den Zylinderräumen auf eine ergänzende Führung verzichtet werden. Nach einer vorteilhaften Weiterbildung der Erfindung ist jedoch vorgesehen, dass die Schaltstange an einer Innenwandung des Grundkörpers längs verschiebbar geführt ist. Diese Ausgestaltung der Erfindung verbessert die Führung der Schaltstange bei einem Schaltvorgang in ergänzender Weise. Einem schädigenden Verkanten der Kolbenabschnitte innerhalb der Zylinderräume wird hierdurch in besonders zuverlässiger Weise vorgebeugt, wodurch die Zuverlässigkeit der Stellvorrichtung in ergänzender Weise gesteigert wird.

Die Anbindung der Stellvorrichtung an das Kraftfahrzeuggetriebe kann grundsätzlich in beliebiger Weise erfolgen. Nach einer besonders vorteilhaften Ausgestaltung der Erfindung weist hierzu der Grundkörper jedoch eine Durchtrittsöffnung für ein mit der Schaltstange verbindbares Stellelement auf. Dementsprechend kann über das Stellelement die Bewegung der Schaltstange auf bspw. eine Schaltgabel übertragen werden, welche ihrerseits die zu wählende Gangstufe einstellt. Aufgrund der Mehrteiligkeit der Zylindereinheit ist es dabei nicht zwingend erforderlich, die Innenwandung des Grundkörpers im Bereich der Durchtrittsöffnung in besonderer Weise zu bearbeiten, um Beschädigungen der Kolbenabschnitte vorzubeugen, da die Durchtrittsöffnung bei der Montage nicht mit den Kolbenabschnitten in Kontakt gelangt.

Wie bereits zuvor dargestellt, kann die Schaltstange nach einer vorteilhaften Weiterbildung der Erfindung an der Innenwandung des Grundkörpers geführt werden. Die Ausgestaltung der Schaltstange ist hierbei grundsätzlich frei wählbar. Nach einer vorteilhaften Weiterbildung der Erfindung ist jedoch vorgesehen, dass die Schaltstange Stützkörper aufweist, welche an der Innenwandung des Grundkörpers anliegen. Die Verwendung von Stützkörpern ermöglicht zum einen eine besonders zuverlässige Führung der Schaltstange, wobei gleichzeitig eine nur geringe Reibung vorliegt, so dass eine zuverlässige Verlagerung der Schaltstange in Folge einer Druckbeaufschlagung der Zylinderräume erfolgen kann.

Die Ausbildung der Kolbenabschnitte kann grundsätzlich in beliebiger Weise erfolgen. Nach einer besonders vorteilhaften Weiterbildung der Erfindung ist jedoch vorgesehen, dass die Kolbenabschnitte durch an den gegenüberliegenden Enden der Schaltstange angeordnete Stellkolben gebildet sind. Diese Ausgestaltung der Erfindung ermöglicht es, die Schaltstange mit den Kolbenabschnitten besonders leicht auszubilden. So kann die Schaltstange bspw. durch ein schmales Mitteilteil gebildet sein, an welches endseitig die Stellkolben angeschraubt werden. Darüber hinaus können für die Stellkolben andere Materialien als für den übrigen Bereich der Schaltstange verwendet werden, so dass eine besondere Anpassung der Kolbenabschnitte an die Zylinderräume möglich ist.

Nach einer besonders vorteilhaften Weiterbildung der Erfindung ist dabei vorgesehen, dass die Stellkolben umlaufend angeordnete, an einer Innenwandung der Zylinderräume anliegende Kolbendichtungselemente aufweisen, wobei die Kolbendichtungselemente bevorzugt eine Leckageausnehmung aufweisen. Über den Leckagekanal können bei einer schaltungsbedingten Druckbefüllung eines der beiden Zylinderräume darin befindliche Luftblasen in einen Zwischenraum zwischen der Außenwand der Stellkolben und der Innenwand der Zylinderräume gelangen. Hierdurch ergibt sich ein schnelleres Ansprechverhalten und eine höhere Präzision der Schaltstangenbetätigung und damit der Schaltvorgänge des Schaltgetriebes. Darüber hinaus gelangt über den Leckagekanal auch Hydrauliköl in den Zwischenraum, wodurch die Schmierung der Führung und der Kolbendichtungselemente verbessert wird, was mit einem geringeren Verschleiß bzw. längeren Lebensdauer dieser Bauteile einhergeht.

Nach einer weiteren Ausgestaltung der Erfindung sind die Kolbenabschnitte einstückig mit der Schaltstange ausgebildet. So kann die Schaltstange bspw. aus einem zylindrischen Rohling geformt sein, bei dem die Kolbenabschnitte aus den Endbereichen des Rohlings herausgearbeitet werden. Endseitige Bohrungen ermöglichen es dabei, Gewicht der Schaltstange einzusparen, sowie den Hubraum zu vergrößern.

Die Abdichtung der Zylinderräume gegenüber den Kolbenabschnitten kann grundsätzlich in beliebiger Weise, bspw. wie vorstehend dargelegt über Kolbendichtungselemente erfolgen. Nach einer vorteilhaften Weiterbildung der Erfindung ist vorgesehen, dass die Zylinderräume durch an einer Innenwandung der Zylindereinheit angeordnete, im Bereich der Kolbenabschnitte an der Schaltstange anliegende Dichtungselemente gegenüber einem zwischen den Zylinderräumen angeordneten Mittelbereich abgegrenzt sind. Gemäß dieser Ausgestaltung der Erfindung kann auf eine Anordnung von Kolbendichtungselementen an den Stellkolben verzichtet werden. Hierdurch ist eine besonders einfache, sowie kostengünstige Montage möglich.

Eine ergänzende Kostenreduzierung kann gemäß einer Weiterbildung der Erfindung dadurch erzielt werden, dass die Dichtungselemente derart an der Innenwandung der Zylindereinheit angeordnet sind, dass sie an einem Zylinderkörper und dem Grundkörper anliegen. Gemäß dieser Ausgestaltung der Erfindung erfüllen die Dichtungselemente sowohl die Funktion der Abdichtung der Zylinderräume gegenüber dem Mittelbereich, als auch eine Abdichtung der Verbindung zwischen dem Zylinderkörper und dem Grundkörper. Somit kann auf hierfür andernfalls eventuell vorgesehene Dichtungselemente verzichtet werden.

Neben der bereits vorstehend dargestellten Möglichkeit der Anordnung von Leckageöffnungen in den Kolbendichtungselementen, kann nach einer weiteren Ausgestaltung der Erfindung vorgesehen sein, dass die Zylinderkörper eine in den jeweiligen Zylinderraum reichende Leckageöffnung aufweisen. Diese Ausgestaltung der Leckageöffnung lässt sich besonders einfach ausgestalten und ermöglicht eine präzise und zuverlässige sowie schnelle Durchführung der Schaltvorgänge.

Ausführungsbeispiele der Erfindung werden nachstehend mit Bezug auf die Zeichnungen erläutert. In den Zeichnungen zeigen:
- Fig. 1: eine perspektivische Ansicht einer ersten Ausführungsform einer Stelleinheit mit zwei hydraulischen Stellvorrichtungen;
- Fig. 2: eine Ansicht eines Schnitts der Stellvorrichtung von Fig. 1 und
- Fig. 3: eine Schnittansicht einer weiteren Ausführungsform einer Stellvorrichtung.

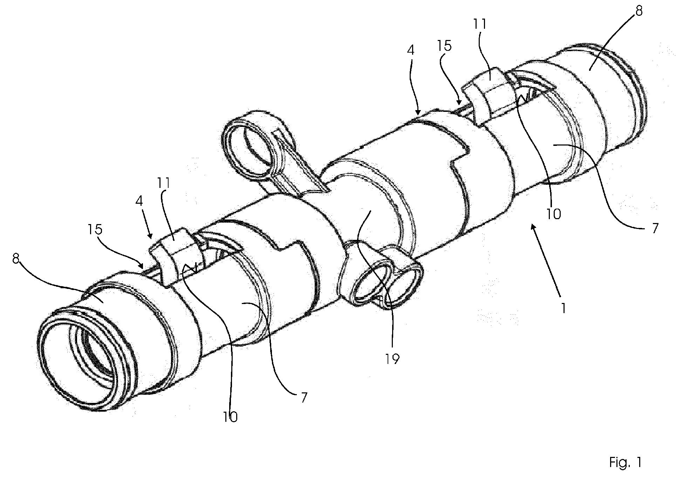

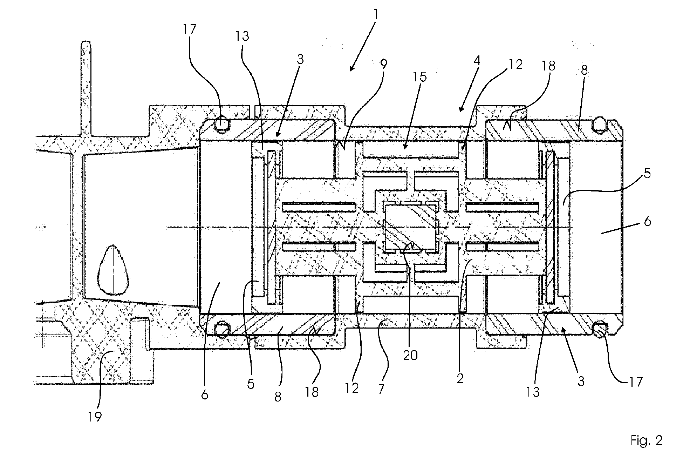

In Fig. 1 ist in einer perspektivischen Darstellung eine Stelleinheit dargestellt, welche zwei beidseitig an einem Träger 19 angeordnete Stellvorrichtungen 1 aufweist. Die Stellvorrichtungen 1 weisen dabei einen hohlzylindrischen Grundkörper 7 auf, welcher an seinen gegenüberliegenden Endbereichen mit Zylinderkörpern 8 verbunden ist. Die Zylinderkörper 8 sind dabei in einem Aufnahmeabschnitt 18 des Grundkörpers 7 angeordnet, wobei die Auf-nahmeabschnitte 18 einen größeren Durchmesser aufweisen als ein Mittelbereich 15 des Grundkörpers 7, wodurch ein Absatz gebildet ist, über den die Zylinderkörper 8 in ihrem Abstand zueinander festgelegt sind. Die Zylinderkörper 8 sowie der Grundkörper 7 bilden gemeinsam eine Zylindereinheit 4 der Stellvorrichtung 1 innerhalb derer eine Schaltstange 2 längsverschiebbar angeordnet ist. Diese Schaltstange weist in ihrem mittleren Bereich einen Verbindungsabschnitt 20 auf, an dem ein Stellelement 11 befestigt werden kann, welches aus einer Durchtrittsöffnung 10 des Grundkörpers 7 herausragt und die Möglichkeit bietet, Bewegungen der Schaltstange 2 über das Stellelement 11 auf ein hier nicht dargestelltes Fahrzeuggetriebe zu übertragen (vgl. Fig. 2).

Die Schaltstange 2 weist endseitig angeordnete Kolbenabschnitte 3 auf, welche durch mit der Schaltstange 2 verbundene Stellkolben 5 gebildet sind. Die Stellkolben 5 sind über radial angeordnete Kolbendichtungselemente 13 in den Zylinderräumen 6 der Zylinderkörper 8 geführt, so dass eine Druckbeaufschlagung der Zylinderräume 6 eine Verschiebung der Schaltstange 2 bewirkt. Zusätzlich zu einer Führung über die Kolbedichtungselemente 13 weist die Schaltstange 2 Stützkörper 12 auf, welche in einem Mittelbereich 15 der Zylindereinheit 4 an einer Innenwandung 9 des Grundkörpers 7 anliegen.

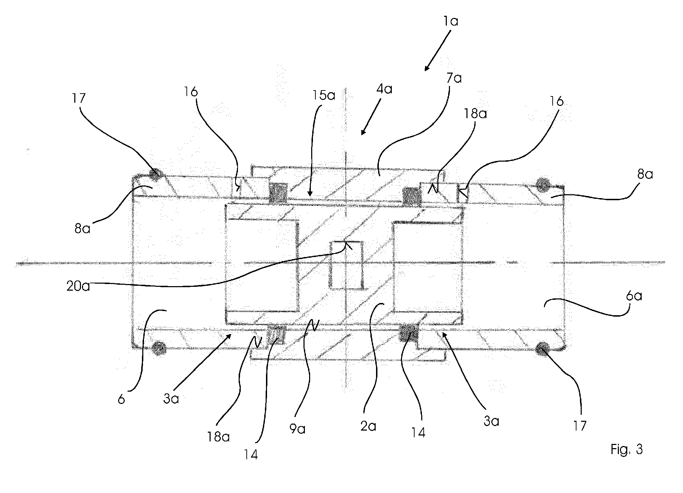

Außenseitig an den Zylinderkörpern 8 angeordnete Dichtringe 17 dienen zur flüssigkeitsdichten Anbindung der Stellvorrichtung 1 an dem Träger 19. Der dreiteilige Aufbau der Zylindereinheit 4 ermöglicht es, nach erfolgter Anordnung der Schaltstange 2 an dem Grundkörper 7 anschließend die Stellkolben 5 mit Kolbedichtungselemente 13 zu versehen und diese dann innerhalb der Zylinderkörper 8 zu platzieren, so dass die Kolbedichtungselemente 13 nicht dem Risiko einer Beschädigung im Rahmen der Montage ausgesetzt sind. Eine weitere Ausführungsform einer Stellvorrichtung 1a ist in Fig. 3 dargestellt. Die Schaltstange 2a ist dabei als einstückiger Körper ausgebildet, dessen Umfangsfläche über die Länge betrachtet einen gleichmäßigen Durchmesser aufweist. Die Zylindereinheit 4a der Stellvorrichtung 1a ist dabei wiederum durch Zylinderkörper 8a, sowie einen Grundkörper 7a gebildet, die im Kontaktbereich über Dichtungselemente 14 miteinander flüssigkeitsdicht verbunden sind. Die Dichtungselemente 14 sind dabei derart angeordnet, dass sie von der Innenwandung 9a im Mittelbereich 15 in den Innenraum vorstehen. Die Zylinderräume 6a sind somit über die Dichtungselemente 14 gegenüber dem Mittelbereich 15a abgedichtet. Die Endbereiche der Schaltstange 2a bilden somit die Kolbenabschnitte 3a, welche im Falle einer Druckbeaufschlagung der Druckräume 6a verschoben werden.

Zur Anbindung eines Stellelements 11 weist die Schaltstange 2a einen entsprechenden Verbindungsabschnitt 20a auf. Zusätzlich weisen die Zylinderkörper 8a noch in die Zylinderräume 6a hineinreichende Leckageöffnungen 16 auf, welche ein schnelles Ansprechverhalten gewährleisten.

### Bezugszeichenliste

- 1, 1a: Stellvorrichtung
- 2, 2a: Schaltstange
- 3, 3a: Kolbenabschnitt
- 4, 4a: Zylindereinheit
- 5: Stellkolben
- 6, 6a: Zylinderräume
- 7, 7a: Grundkörper
- 8, 8a: Zylinderkörper
- 9, 9a: Innenwandung
- 10: Durchtrittsöffnung
- 11: Stellelement
- 12: Stützkörper
- 13: Kolbendichtungselement
- 14: Dichtungselement
- 15, 15a: Mittelbereich
- 16: Leckageöffnung
- 17: Dichtring
- 18, 18a: Aufnahmeabschnitt
- 19: Träger
- 20, 20a: Verbindungsabschnitt

## Patentansprüche

1. Hydraulische Stellvorrichtung für ein automatisches Kraftfahrzeuggetriebe, insbesondere Doppelkupplungsgetriebe, mit
- einer zur Verstellung des Getriebes längs verschiebbaren Schaltstange (2, 2a) mit an ihren gegenüberliegenden Enden angeordneten Kolbenabschnitten (3, 3a) sowie
- einer Zylindereinheit (4, 4a) mit zwei zur Aufnahme der Kolbenabschnitte ausgebildeten Zylinderräumen (6, 6a),
**dadurch gekennzeichnet, dass**
die Zylinderräume (6, 6a) innerhalb zweier im Abstand voneinander angeordneter, über einen Grundkörper (7, 7a) miteinander verbundener Zylinderkörper (8, 8a) angeordnet sind.

2. Hydraulische Stellvorrichtung nach Anspruch 1, **dadurch gekennzeichnet, dass** der Grundkörper (7, 7a) als Hohlzylinder mit endseitigen Aufnahmeabschnitten (18, 18a) zur Anordnung der Zylinderkörper (8, 8a) ausgebildet ist.

3. Hydraulische Stellvorrichtung nach Anspruch 1 oder 2, **dadurch gekennzeichnet, dass** die Schaltstange (2, 2a) an einer Innenwandung (9, 9a) des Grundkörpers (7, 7a) längs verschiebbar geführt ist.

4. Hydraulische Stellvorrichtung nach einem der vorhergehenden Ansprüche, **dadurch gekennzeichnet, dass** der Grundkörper (7, 7a) eine Durchtrittsöffnung (10) für ein mit der Schaltstange (2, 2a) verbindbares Stellelement (11) aufweist.

5. Hydraulische Stellvorrichtung nach einem der vorhergehenden Ansprüche, **dadurch gekennzeichnet, dass** die Schaltstange (2) an der Innenwandung (9) des Grundkörpers (7) anliegende Stützkörper (12) aufweist.

6. Hydraulische Stellvorrichtung nach einem der vorhergehenden Ansprüche, **dadurch gekennzeichnet, dass** die Kolbenabschnitte (3) durch an den gegenüberliegenden Enden der Schaltstange (2) angeordnete Stellkolben (5) gebildet sind.

7. Hydraulische Stellvorrichtung nach einem der vorhergehenden Ansprüche, **dadurch gekennzeichnet, dass** die Stellkolben (5) umlaufend angeordnete, an einer Innenwandung der Zylinderräume (6) anliegende Kolbendichtungselemente (13) aufweisen, die bevorzugt eine Leckageausnehmung aufweisen.

8. Hydraulische Stellvorrichtung nach einem der vorhergehenden Ansprüche, **dadurch gekennzeichnet, dass** die Kolbenabschnitte (3a) einstückig mit der Schaltstange (2a) ausgebildet sind.

9. Hydraulische Stellvorrichtung nach einem der vorhergehenden Ansprüche, **dadurch gekennzeichnet, dass** die Zylinderräume (6a) durch an einer Innenwandung (4a) der Zylindereinheit (4a) angeordnete, im Bereich der Kolbenabschnitte (3a) an der Schaltstange (2a) anliegende Dichtungselemente (14) gegenüber einem zwischen den Zylinderräumen (6a) angeordneten Mittelbereich (15a) abgegrenzt sind.

10. Hydraulische Stellvorrichtung nach einem der vorhergehenden Ansprüche, **dadurch gekennzeichnet, dass** die Dichtungselemente (14) derart an der Innenwandung (4a) der Zylindereinheit (4a) angeordnet sind, dass sie an einem Zylinderkörper (8a) und dem Grundkörper (7a) anliegen.

11. Hydraulische Stellvorrichtung nach einem der vorhergehenden Ansprüche, **dadurch gekennzeichnet, dass** die Zylinderkörper (8a) eine in die Zylinderräume (6a) erreichende Leckageöffnung (16) aufweisen.
